# EUROPEAN PATENT APPLICATION

(11) **EP 4 488 313 A1**
(43) Date of publication of application: **08.01.2025**
(21) Application number: 23763336.7
(22) Date of filing: 22.02.2023
(51) Int. Cl.: C08G 59/50

(54) **EPOXY RESIN COMPOSITION AND CURED PRODUCT THEREOF**

(30) Priority: 01.03.2022 JP 2022031135
(71) Applicant: MITSUBISHI GAS CHEMICAL COMPANY, INC., Chiyoda-ku Tokyo 100-8324 (JP)
(72) Inventor: OHNO Yuma, Hiratsuka-shi, Kanagawa 254-0016 (JP); NISHIMOTO Natsumi, Hiratsuka-shi, Kanagawa 254-0016 (JP); KOUNO Kazuki, Hiratsuka-shi, Kanagawa 254-0016 (JP)
(74) Representative: Gille Hrabal Partnerschaftsgesellschaft mbB Patentanwälte
(86) International application number: PCT/JP2023/006510
(87) International publication number: WO 2023/167077

(57) **Abstract**

Provided are: an epoxy resin composition including an epoxy resin, an epoxy resin curing agent containing a reaction composition (A) containing a reaction product of xylylenediamine with an alkylene oxide, and a non-reactive diluent; and a cured product thereof.

## Description

### Technical Field

The present invention relates to an epoxy resin composition and a cured produced thereof.

### Background Art

Various polyamine compounds are widely known as epoxy resin curing agents. Epoxy resin compositions using polyamine compounds as epoxy resin curing agents have been used also in the paint fields, such as a corrosion-resistant paint for ships, bridges, and iron structures on land and sea, and in the civil engineering construction fields, such as lining, reinforcement, repair materials of concrete structures, floor materials of buildings, lining of water supply and sewage systems, paving materials, and adhesives.

Among these, for epoxy resin compositions for paints, it is important that coating films provided therefrom have good appearances and good coating film properties such as water resistance, chemical resistance, and impact resistance.

Xylylenediamine that is a kind of aliphatic polyamine compound has fast curing property when used as an epoxy resin curing agent, and further, it has characteristics of being excellent also in low-temperature curability, chemical resistance, and the like, as compared with other aliphatic polyamines. However, since xylylenediamine is easy to absorb carbon dioxide or water vapor in the atmosphere and to produce a carbamate, a coating film formed from an epoxy resin composition using xylylenediamine as the epoxy resin curing agent is liable to suffer whitening, and the appearance of the coating film tends to deteriorate.

Methods for improving such whitening of the coating film as above have also been studied. For example, Patent Literature 1 discloses a wet surface or underwater curable epoxy resin composition comprising a reaction product of a polyamine with an adduct forming agent (excluding glycidyl ether, carboxylic acid, and lactam), activated alumina or silica alumina, and an epoxy resin, and describes, as the reaction product of polyamine with an adduct forming agent, an adduct obtained by reacting metaxylylenediamine with propylene oxide. Furthermore, it is described that the epoxy resin composition does not undergo amine blushing and has flexibility.

Patent Literature 2 discloses, as an epoxy resin curing agent to be used for a gas barrier layer of a gas barrier laminate, an epoxy resin curing agent that is a reaction product of metaxylylenediamine with ethylene oxide.

### Citation List

### Patent Literature

PTLL JP 49-129000 A
PTL2: JP 2002-361785 A

### Summary of Invention

### Technical Problem

As described above, an epoxy resin curing agent that is a reaction product of metaxylylenediamine with an alkylene oxide is disclosed in Patent Literatures 1 and 2. However, there is still room for improvement in performance of an epoxy resin composition using the epoxy resin curing agent and a coating film that is a cured product thereof. Particularly for the epoxy resin composition for a paint, it is required that a coating film obtained by using the epoxy resin composition should have good appearance, and from the viewpoint of improvement in impact resistance, the resulting coating film should also have good elongation.

It is an object of the present invention to provide an epoxy resin composition capable of forming a coating film having good appearance (transparency and gloss) and good elongation, and a cured product thereof.

### Solution to Problem

The present inventors have found that the above problems can be solved by an epoxy resin composition including an epoxy resin, an epoxy resin curing agent containing a reaction composition containing a reaction product of xylylenediamine with an alkylene oxide, and a non-reactive diluent.

Accordingly, the present invention relates to the following.
[1] An epoxy resin composition including: an epoxy resin; an epoxy resin curing agent containing a reaction composition (A) containing a reaction product of xylylenediamine with an alkylene oxide; and a non-reactive diluent.
[2] A cured product of the epoxy resin composition according to the above [1].

### Advantageous Effects of Invention

The present invention can provide an epoxy resin composition capable of forming a coating film having good appearance (transparency and gloss) and elongation, and a cured product thereof.

### Description of Embodiments

### [Epoxy resin composition]

The epoxy resin composition of the present invention includes: an epoxy resin; an epoxy resin curing agent containing a reaction composition (A) (also referred to a "reaction composition (A)" simply hereinafter) containing a reaction product of xylylenediamine with an alkylene oxide; and a non-reactive diluent. By using the epoxy resin composition, a coating film having good appearance (transparency and gloss) and elongation can be formed. Hereinafter, the epoxy resin composition of the present invention is also referred to as the "composition of the present invention" simply.

The reason why the above effects are obtained by using the epoxy resin composition of the present invention is not clear, but it is considered as follows.

First, it is considered that by modifying xylylenediamine to be used for the epoxy resin curing agent with an alkylene oxide, the aforementioned whitening of a coating film due to the formation of a carbamate can be suppressed. As described later, the reaction composition (A) may contain xylylenediamine that is an unreacted starting material, and the like, and the xylylenediamine sometimes forms a carbamate. However, it is considered that since the reaction composition (A) has high dissolving power for xylylenediamine carbamate, whitening of a coating film derived from the formation of the carbamate can also be suppressed, and as a result, a coating film having good appearance can be formed.

Moreover, it is considered that by combining the epoxy resin curing agent containing the reaction composition (A) with the non-reactive diluent, elongation of a coating film that is a cured product of the epoxy resin composition of the present invention is improved.

### <Epoxy resin>

The epoxy resin that is a main agent of the epoxy resin composition may be any of saturated or unsaturated aliphatic compounds and alicyclic compounds, aromatic compounds, and heterocyclic compounds. From the viewpoint of obtaining a cured product having high water resistance, an epoxy resin having an aromatic ring or an alicyclic structure in a molecule is preferred.

Specific examples of the epoxy resins include at least one resin selected from the group consisting of an epoxy resin having a glycidylamino group derived from metaxylylenediamine, an epoxy resin having a glycidylamino group derived from paraxylylenediamine, an epoxy resin having a glycidylamino group derived from 1,3-bis(aminomethyl)cyclohexane, an epoxy resin having a glycidylamino group derived from 1,4-bis(aminomethyl)cyclohexane, an epoxy resin having a glycidylamino group derived from diaminodiphenylmethane, an epoxy resin having a glycidylamino group and/or a glycidyloxy group derived from para-aminophenol, an epoxy resin having a glycidyloxy group derived from bisphenol A, an epoxy resin having a glycidyloxy group derived from bisphenol F, an epoxy resin having a glycidyloxy group derived from phenolic novolak, and an epoxy resin having a glycidyloxy group derived from resorcinol. The epoxy resins described above may also be used as a mixture of two or more thereof.

Among the above, from the viewpoint of being able to form a coating film having good appearance and elongation, from the viewpoint of improvement in curing rate, and from the viewpoint of improvement in water resistance of the resulting coating film, the epoxy resin is preferably one containing, as a main component, at least one selected from the group consisting of an epoxy resin having a glycidylamino group derived from metaxylylenediamine, an epoxy resin having a glycidylamino group derived from paraxylylenediamine, an epoxy resin having a glycidyloxy group derived from bisphenol A, and an epoxy resin having a glycidyloxy group derived from bisphenol F, and from the viewpoint of being able to form a coating film having good appearance and elongation and from the viewpoint of availability and cost efficiency, the epoxy resin is more preferably one containing, as a main component, an epoxy resin having a glycidyloxy group derived from bisphenol A.

The "main component" referred to herein means that other components may be included without departing from the gist of the present invention, and means preferably 50 to 100 mass%, more preferably 70 to 100 mass%, and still more preferably 90 to 100 mass%, of the total.

From the viewpoint of improvement in handleability, the epoxy resin that is a main agent may contain a reactive diluent other than the above epoxy resins. The reactive diluent is, for example, a low-molecular compound having at least one epoxy group, and examples thereof include aromatic monoglycidyl ethers, such as phenyl glycidyl ether and cresyl glycidyl ether; alkyl monoglycidyl ethers, such as butyl glycidyl ether, hexyl glycidyl ether, octyl glycidyl ether, decyl glycidyl ether, lauryl glycidyl ether, and tetradecyl glycidyl ether; and diglycidyl ethers of aliphatic diols, such as 1,3-propanediol diglycidyl ether, 1,4-butanediol diglycidyl ether, neopentyl glycol diglycidyl ether, and 1,6-hexanediol diglycidyl ether.

The reactive diluents can be used singly or in combination of two or more.

### <Epoxy resin curing agent>

The epoxy resin curing agent to be used for the epoxy resin composition contains a reaction composition (A) containing a reaction product of xylylenediamine with an alkylene oxide. Since the epoxy resin curing agent contains the reaction composition (A), the resulting coating film has good appearance (transparency and gloss). Furthermore, by using it in combination with a non-reactive diluent, an effect of improving elongation of the coating film is obtained.

### (Reaction composition (A))

The reaction composition (A) contains a reaction product of xylylenediamine with an alkylene oxide.

In the present specification, the "reaction product of xylylenediamine with an alkylene oxide" means an addition reaction product (adduct) of xylylenediamine with an alkylene oxide. Examples of the reaction product of xylylenediamine with an alkylene oxide include not only an addition reaction product of 1 mol of xylylenediamine with 1 mol of an alkylene oxide (1: 1 adduct) but also polyadducts, such as a 1:2 adduct and a 1:3 adduct of xylylenediamine with an alkylene oxide.

The "reaction composition (A) containing a reaction product of xylylenediamine with an alkylene oxide" is a reaction product obtained by the reaction of xylylenediamine with an alkylene oxide, and may contain, in addition to the above adduct, an unreacted starting material such as xylylenediamine, and the like.

Examples of the xylylenediamine include orthoxylylenediamine, metaxylylenediamine (MXDA), and paraxylylenediamine (PXDA). Among these, from the viewpoint of being able to form a coating film having good appearance, at least one selected from the group consisting of metaxylylenediamine and paraxylylenediamine is preferred, and from the viewpoint of being able to form a coating film having good appearance and elongation, metaxylylenediamine is more preferred.

From the viewpoint of being able to form a coating film having good appearance and elongation, the alkylene oxide is preferably an alkylene oxide having 2 to 6 carbon atoms, more preferably an alkylene oxide having 2 to 4 carbon atoms, still more preferably at least one selected from the group consisting of ethylene oxide and propylene oxide, and from the viewpoint of improvement in water resistance of the resulting coating film, the alkylene oxide even more preferably includes ethylene oxide, and it is even more preferably ethylene oxide.

The alkylene oxide can be used singly or in combination of two or more.

In the reaction composition (A), the reaction mole ratio of xylylenediamine and the alkylene oxide is not particularly restricted as long as it is within the range in which the reaction composition (A) has active hydrogen atoms derived from amino groups enough to function as the epoxy resin curing agent. From the viewpoint of being able to form a coating film having good appearance, from the viewpoint of improvement in curing rate, and from the viewpoint of improvement in water resistance of the resulting coating film, the reaction composition (A) is a composition obtained by reacting xylylenediamine with an alkylene oxide preferably at a mole ratio (xylylenediamine/alkylene oxide) of 1/0.2 to 1/4, more preferably 1/0.2 to 1/3, still more preferably 1/0.2 to 1/2, even more preferably 1/0.5 to 1/2, and even more preferably 1/0.8 to 1/1.2.

The reaction composition (A) can be produced by reacting xylylenediamine with an alkylene oxide under the heating conditions. For example, xylylenediamine is fed in a reaction container, then with stirring, the alkylene oxide is added by blowing or dropping it preferably under the heating conditions of 50 to 150°C, more preferably 70 to 130°C, and after the completion of addition, they are reacted for 0.5 to 12 hours with continuing heating, and thus, the composition can be produced. The reaction is preferably carried out in an atmosphere of an inert gas such as nitrogen gas.

After the completion of reaction, the resulting reaction liquid can be used as it is as the reaction composition (A). The reaction liquid may be used as the reaction composition (A) after it is purified to remove the unreacted starting materials, when needed.

The epoxy resin curing agent may contain a curing agent component other than the reaction composition (A). Examples of the curing agent component include components known as epoxy resin curing agents, but from the viewpoint of improvement in curing rate, a polyamine other than the reaction composition (A) is preferred.

The polyamine is not particularly restricted as long as it is a compound having at least two amino groups in a molecule. Examples thereof include 1,2-bis(aminomethyl)cyclohexane, 1,3-bis(aminomethyl)cyclohexane, 1,4-bis(aminomethyl)cyclohexane, menthenediamine, isophoronediamine (IPDA), diaminodicyclohexylmethane, bis(4-amino-3-methylcyclohexyl)methane, N-aminomethylpiperazine, N-aminoethylpiperazine, norbornanediamine, adamantane diamine, bis(aminomethyl)tricyclodecane, ethylenediamine, diethylenetriamine, triethylenetetramine, tetraethylenepentamine, pentaethylenehexamine, polyoxyalkylenediamine, polyoxyalkylenetriamine; reaction products obtained by reacting the above amines with epoxy compounds having at least one epoxy group, unsaturated hydrocarbon compounds, carboxylic acid or its derivatives, and the like; Mannich reaction products obtained by reacting the above amines with phenolic compounds and aldehyde compounds; and ketoimines (ketimines) obtained by reacting the above amines with ketone compounds. These can be used singly or in combination of two or more.

However, from the viewpoint of obtaining the effects of the present invention, the content of the reaction composition (A) in all the curing agent components contained in the epoxy resin curing agent is preferably 50 mass% or more, more preferably 60 mass% or more, still more preferably 70 mass% or more, even more preferably 80 mass% or more, even more preferably 90 mass% or more, even more preferably 95 mass% or more, and it is 100 mass% or less.

The curing agent component in the curing agent means a component contained in the curing agent and having two or more active hydrogen atoms that can react with epoxy groups in the epoxy resin, and mass% of the reaction composition based on all the curing agent components in the curing agent refers to a content ratio of the reaction composition based on the total amount of the curing agent components contained in the curing agent.

From the viewpoint of being able to form a coating film having good appearance, from the viewpoint of improvement in curing rate, and from the viewpoint of improvement in water resistance of the resulting coating film, the active hydrogen equivalent weight of the epoxy resin curing agent is preferably 40 or more, more preferably 50 or more, still more preferably 55 or more, and from the viewpoint of improvement in curability, it is preferably 150 or less, more preferably 120 or less, still more preferably 110 or less, and even more preferably 100 or less. The active hydrogen equivalent weight (also referred to as "AHEW" hereinafter) in the present specification is the mass of the epoxy resin curing agent per mol of active hydrogen derived from an amino group. The AHEW of the epoxy resin curing agent can be calculated from the amine value.

The content ratio of the epoxy resin and the epoxy resin curing agent in the epoxy resin composition of the present invention is such an amount that the ratio of the number of active hydrogen atoms derived from amino groups in the epoxy resin curing agent to the number of epoxy groups in the epoxy resin (the number of active hydrogen atoms derived from amino groups in the epoxy resin curing agent/the number of epoxy groups in the epoxy resin) becomes preferably 1/0.5 to 1/2, more preferably 1/0.75 to 1/1.5, and still more preferably 1/0.8 to 1/1.2.

### <Non-reactive diluent>

From the viewpoint of improvement in handleability and from the viewpoint of improvement in elongation of the resulting coating film, the epoxy resin composition contains a non-reactive diluent. Good elongation of the coating film is advantageous in that the coating film is hardly cracked, and high impact resistance is obtained. Furthermore, by using the non-reactive diluent, water resistance of the coating film is also improved.

Examples of the non-reactive diluents include benzyl alcohol, furfuryl alcohol, tetrafurfuryl alcohol, and an aromatic hydrocarbon formaldehyde resin, and among these, one or more can be used.

The aromatic hydrocarbon formaldehyde resin is a resin obtained by reacting an aromatic hydrocarbon with formaldehyde, and examples thereof include a toluene formaldehyde resin obtained by reacting toluene with formaldehyde, a xylene formaldehyde resin obtained by reacting xylene with formaldehyde, a mesitylene formaldehyde resin obtained by reacting mesitylene with formaldehyde, and a pseudocumene formaldehyde resin obtained by reacting pseudocumene with formaldehyde. Among these, from the viewpoint of improvement in elongation of the resulting coating film, the aromatic hydrocarbon formaldehyde resin is preferably a xylene formaldehyde resin.

Examples of commercial products of the aromatic hydrocarbon formaldehyde resin include "NIKANOL Y-50", "NIKANOL Y-100", "NIKANOL Y-300", "NIKANOL Y-1000", "NIKANOL L", "NIKANOL LL", "NIKANOL LLL", "NIKANOL G", "NIKANOL H", and "NIKANOL H-80", which are xylene formaldehyde resins manufactured by Fudow Co.,Ltd.

Among the above, from the viewpoint of improvement in water resistance and from the viewpoint of solubility of the epoxy resin and the epoxy resin curing agent, the non-reactive diluent is preferably at least one selected from the group consisting of benzyl alcohol and the aromatic hydrocarbon formaldehyde resins, more preferably at least one selected from the group consisting of benzyl alcohol and a xylene formaldehyde resin, still more preferably contains benzyl alcohol, and is even more preferably benzyl alcohol.

When the non-reactive diluent contains benzyl alcohol, the content of benzyl alcohol in the non-reactive diluent is preferably 20 mass% or more, more preferably 30 mass% or more, still more preferably 50 mass% or more, even more preferably 55 mass% or more, even more preferably 70 mass% or more, and is 100 mass% or less, from the viewpoint of improving elongation of the resulting coating film.

From the viewpoint of improvement in handleability and from the viewpoint of improving water resistance and elongation of the resulting coating film, the content of the non-reactive diluent in the epoxy resin composition is preferably 10 to 500 parts by mass, more preferably 20 to 500 parts by mass, still more preferably 30 to 450 parts by mass, even more preferably 40 to 450 parts by mass, even more preferably 50 to 420 parts by mass, even more preferably 60 to 420 parts by mass, and even more preferably 65 to 400 parts by mass, based on 100 parts by mass of the epoxy resin curing agent.

The contents of the epoxy resin and the epoxy resin curing agent in the epoxy resin composition are not restricted as long as the amounts thereof are such amounts that the ratio of the number of active hydrogen atoms derived from amino groups in the epoxy resin curing agent to the number of epoxy groups in the epoxy resin falls preferably within the aforementioned range, but from the viewpoint of being able to form a coating film having good appearance and elongation, from the viewpoint of improvement in curing rate, and from the viewpoint of improvement in water resistance of the resulting coating film, the contents thereof are preferably within the following ranges.

The content of the epoxy resin in the epoxy resin composition is preferably 30 mass% or more, more preferably 35 mass% or more, and is preferably 70 mass% or less.

The content of the epoxy resin curing agent in the epoxy resin composition is preferably 10 mass% or more, more preferably 12 mass% or more, and is preferably 35 mass% or less, more preferably 30 mass% or less. The content of the epoxy resin curing agent in the epoxy resin composition is preferably 20 to 60 parts by mass, and more preferably 30 to 60 parts by mass, based on 100 parts by mass of the epoxy resin that is a main agent.

The content of the reaction composition (A) in the epoxy resin composition is preferably 5 mass% or more, more preferably 10 mass% or more, still more preferably 15 mass% or more, and is preferably 35 mass% or less, more preferably 30 mass% or less.

From the viewpoint of improvement in handleability and from the viewpoint of improving water resistance and elongation of the resulting coating film, the content of the non-reactive diluent in the epoxy resin composition is preferably 1 mass% or more, more preferably 2 mass% or more, still more preferably 5 mass% or more, and is preferably 60 mass% or less, more preferably 55 mass% or less, still more preferably 50 mass% or less.

From the viewpoint of obtaining the effects of the present invention, the total content of the epoxy resin and the epoxy resin curing agent in the epoxy resin composition is preferably 40 mass% or more, more preferably 50 mass% or more, and is preferably 99 mass% or less, more preferably 95 mass% or less.

From the viewpoint of obtaining the effects of the present invention, the total content of the epoxy resin, the epoxy resin curing agent, and the non-reactive diluent in the epoxy resin composition is preferably 40 mass% or more, more preferably 50 mass% or more, still more preferably 60 mass% or more, even more preferably 70 mass% or more, even more preferably 80 mass% or more, even more preferably 90 mass% or more, and is 100 mass% or less.

### (Curing accelerator)

From the viewpoint of improvement in curing rate and from the viewpoint of improving hardness of the coating film, the epoxy resin composition can further contain a curing accelerator.

Examples of the curing accelerators include phenolic compounds, organic acids, organic acid salts, tertiary amines, quaternary ammonium salts, imidazoles, organophosphorus-based compounds, quaternary phosphonium salts, diazabicycloalkenes, organometallic salt compounds, boron compounds, and metal halides.

Examples of the phenolic compounds include phenol, cresol, hydroquinone, 1-naphthol, 2-naphthol, resorcin, a phenolic novolak resin, p-isopropylphenol, t-butylphenol, nonylphenol, and bisphenol A.

Examples of the organic acids include carboxylic acid-based compounds and sulfonic acid-based compounds.

Examples of the carboxylic acid-based compounds include monocarboxylic acids, such as formic acid, acetic acid, propionic acid, butanoic acid, 2-ethylhexanoic acid, and benzoic acid; hydroxycarboxylic acids, such as lactic acid and salicylic acid; and polyvalent carboxylic acids, such as oxalic acid, malonic acid, maleic acid, itaconic acid, fumaric acid, adipic acid, sebacic acid, isophthalic acid, trimellitic acid, pyromellitic acid, tetrahydrophthalic acid, and hexahydrophthalic acid.

Examples of the sulfonic acid-based compounds include p-toluenesulfonic acid, dodecylbenzenesulfonic acid, and trifluoromethanesulfonic acid.

As the organic acid salts, salts of the above organic acids can be mentioned, and examples thereof include imidazole salts, substituted imidazole salts, diazabicycloundecene (DBU) salts, diazabicyclononene (DBN) salts, diazabicyclooctane (DABCO) salts, tetraethylammonium salts, and tetrabutyl ammonium salts, of the above carboxylic acid-based compounds or sulfonic acid-based compounds.

Examples of the tertiary amines include triethylenediamine, triethanolamine, benzyldimethylamine, dimethylcyclohexylamine, and 2-(dimethylaminomethyl)phenol.

Examples of the quaternary ammonium salts include tetraethylammonium bromide and tetrabutylammonium bromide.

Examples of the imidazoles include 2-methylimidazole, 2-ethylimidazole, 2-phenylimidazole, 1-cyanoethyl-2-ethyl-4-methylimidazole, 2-ethyl-4-methylimidazole, and 1-benzyl-2-methylimidazole.

Examples of the organophosphorus-based compounds include triphenylphosphine, diphenylphosphine, tributylphosphine, and triphenyl phosphite.

Examples of the quaternary phosphonium salts include tetraphenylphosphonium bromide and tetra-n-butylphosphonium bromide.

Examples of the diazabicycloalkenes include 1,8-diazabicyclo[5,4,0]undecene-7.

Examples of the organometallic salt compounds include zinc octylate and tin octylate. Examples of the boron compounds include boron trifluoride and triphenyl borate. Examples of the metal halides include zinc chloride and stannic chloride.

The curing accelerator can be used singly or in combination of two or more.

Among the above, from the viewpoint of improvement in solubility in the epoxy resin composition and curing rate, the curing accelerator is preferably at least one selected from the group consisting of phenolic compounds, organic acids, and organophosphorus-based compounds, more preferably a phenolic compound, still more preferably at least one selected from the group consisting of phenol, cresol, p-isopropylphenol, t-butylphenol, nonylphenol, and bisphenol A, and even more preferably t-butylphenyl.

When the epoxy resin composition contains a curing accelerator, the content of the curing accelerator in the epoxy resin composition is preferably 10 to 50 parts by mass, more preferably 15 to 40 parts by mass, still more preferably 20 to 40 parts by mass, and even more preferably 25 to 40 parts by mass, based on 100 parts by mass of the epoxy resin curing agent, from the viewpoint of improvement in curing rate and from the viewpoint of improving hardness of the coating film.

In the epoxy resin composition of the present invention, other components, such as a filler, a modifying component, e.g., plasticizer, a flow control component, e.g., thixotropic agent, a pigment, a leveling agent, a tackifier, and elastomer fine particles, may be further contained depending on the application.

The epoxy resin composition of the present invention may contain solvents other than the non-reactive diluent (water and volatile solvent), but the content thereof in the epoxy resin composition is preferably 5 mass% or less, more preferably 2 mass% or less, and still more preferably 1 mass% or less.

### <Method for producing epoxy resin composition>

The method for producing the epoxy resin composition of the present invention is not particularly restricted, and the epoxy resin composition can be produced by mixing the epoxy resin, the epoxy resin curing agent, the non-reactive diluent, and if needed, other components, using known method and apparatus. The order of mixing the components to be contained in the epoxy resin composition is not particularly restricted either, and after the epoxy resin curing agent is prepared, this may be mixed with the epoxy resin, or the components to constitute the epoxy resin curing agent, other components, and the epoxy resin may be mixed simultaneously to prepare the epoxy resin composition.

From the viewpoint of ease of production, the epoxy resin composition is preferably prepared by preparing the epoxy resin curing agent composition containing the epoxy resin curing agent and the non-reactive diluent, and subsequently mixing the epoxy resin curing agent composition with the epoxy resin that is a main agent. When the curing accelerator is used, the epoxy resin composition is preferably prepared by preparing the epoxy resin curing agent composition containing the epoxy resin curing agent, the non-reactive diluent, and the curing accelerator, and then mixing the epoxy resin curing agent composition with the epoxy resin that is a main agent.

### [Cured product]

The cured product of the epoxy resin composition of the present invention (also referred to as the "cured product of the present invention" simply hereinafter) is a substance obtained by curing the epoxy resin composition through a known method. The curing conditions for the epoxy resin composition can be appropriately selected according to the application and the form, and are not particularly restricted.

The form of the cured product of the present invention is not particularly restricted either, and can be selected according to the application. From the viewpoint of being able to form a coating film having good appearance, the cured product of the epoxy resin composition is preferably a cured product in the form of a film.

The coating film that is a cured product of the epoxy resin composition of the present invention has good appearance (transparency and gloss) and also has good water resistance and elongation.

### <Use application>

Since the epoxy resin composition of the present invention can form a coating film having good appearance (transparency and gloss), it is preferably used in, for example, paint applications, such as ship paints, heavy-duty anticorrosive paints, paints for tanks, paints for pipe interior painting, paints for exterior painting, and paints for floor materials.

### Examples

Hereinafter, the present invention will be described in detail with reference to Examples and Comparative Examples, but the present invention is not limited to the following examples. Evaluations of the epoxy resin curing agent, the epoxy resin composition, and the cured product thereof were carried out in accordance with the following methods.

### <Dry to the touch>

A zinc phosphate-treated steel plate (manufactured by PALTEK CORPORATION.; SPCC-SDPB-N144 0.8 × 70 × 150 mm) was used as a base material. Under the conditions of 23°C and 50%R.H., the epoxy resin composition of each example was applied onto the base material using an applicator to form a coating film (coating film thickness immediately after application: 200 µm). This coating film was kept under the conditions of 23°C and 50%R.H., and after a lapse of one day, the coating film was evaluated by touching based on the following criteria. The results are shown in Tables 1 to 2.
Ex: Excellent (there is no sticking of the coating film even when the thumb is pressed with a force of about 50 N, and no fingerprints remain)
G: Good (there is no sticking of the coating film even when the thumb is pressed with a force of about 50 N, but fingerprints remain after touching)
F: Fair (there is sticking of the coating film when the thumb is pressed with a force of about 50 N)
P: Poor (uncured)

### <Water resistance spot test>

The epoxy resin composition was applied onto a base material (zinc phosphate-treated steel plate) in the same manner as above to form a coating film (thickness immediately after application: 200 µm). This coating film was kept under the conditions of 23°C and 50%R.H., and after a lapse of one day and 7 days, 2 to 3 drops of pure water were dropped on the surface of the coating film with a dropper, and the portion was covered with a 50 mL screw tube bottle. After a lapse of 24 hours, water was wiped off, and the appearance was observed visually and evaluated based on the following criteria. The results are shown in Tables 1 to 2.
Ex: No change at all
G: Slight changes existed, but no problem with use
F: Slight whitening occurred
P: Significant whitening occurred

### <Appearance (transparency/gloss)>

The epoxy resin composition of each example was applied onto a base material (zinc phosphate-treated steel plate) in the same manner as above using an applicator to form a coating film (coating film thickness immediately after application: 200 µm). This coating film was kept under the conditions of 23°C and 50%R.H., and after a lapse of one day, the appearance was observed visually to evaluate transparency and gloss based on the following criteria. The results are shown in Tables 1 to 2.

### (Transparency)

Ex: No turbidity existed
G: Slight turbidity existed, but no problem with use
F: White turbidity existed

### (Gloss)

Ex: Gloss existed
G: Slight deterioration in gloss existed, but no problem with use
F: No gloss existed

### <RCI drying time (Dust Free)>

The epoxy resin composition of each example was applied onto a glass plate (manufactured by Taiyu Kizai Co., Ltd., 25 × 348 × 2.0 mm) under the conditions of 23°C and 50%R.H. using an applicator of 76 µm to form a coating film. The glass plate on which the coating film had been formed was set on a paint drying time measuring instrument (manufactured by Taiyu Kizai Co., Ltd.), the striations when a needle of the measuring instrument scratched the surface of the coating film were observed to measure the time to reach Dust Free (time taken until when traces of the needle emerges from the middle of the coating film onto the surface of the coating film). The results are shown in Tables 1 to 2. A shorter time indicates a higher curing rate.

### <Erichsen test>

The epoxy resin composition of each example was applied onto a base material (zinc phosphate-treated steel plate) in the same manner as above using an applicator to form a coating film (coating film thickness immediately after application: 200 µm). This coating film was kept under the conditions of 23°C and 50%R.H., and after a lapse of 7 days, the coating film was subjected to Erichsen test under the conditions of 23°C and 50%R.H. in accordance with JIS K 5600-5-2:1999 (cupping resistance) using an Erichsen film strength tester ("HD-4510" manufactured by Ueshima Seisakusho Co., Ltd.), and a minimum indentation depth before a coating film defect occurred was measured. The results are shown in Tables 1 to 2. A larger value indicates a better elongation of the coating film.

### Production Example 1 (production of reaction composition (A1) containing reaction product of metaxylylenediamine with ethylene oxide (reaction mole ratio 1/1))

In a reaction container, 136.19 g (1 mol) of metaxylylenediamine (MXDA, manufactured by Mitsubishi Gas Chemical Company, Inc.) was fed, and while stirring in a stream of nitrogen, the temperature was raised to 80°C. While continuing stirring, 44.05 g (1 mol) of ethylene oxide was blown into the reaction container over a period of 5 hours, and after the completion of blowing, stirring was carried out at 80 to 120°C for 1 hour to react them, thereby obtaining a reaction composition (A1) (MXDA-EO (1/1)). The active hydrogen equivalent weight (AHEW) derived from amino groups of the reaction composition (A1) was 60.

### Production Example 2 (production of reaction composition (A2) containing reaction product of metaxylylenediamine with propylene oxide (reaction mole ratio 1/1))

In a reaction container, 136.19 g (1 mol) of metaxylylenediamine (MXDA, manufactured by Mitsubishi Gas Chemical Company, Inc.) was fed, and while stirring in a stream of nitrogen, the temperature was raised to 80°C. While continuing stirring, 58.1 g (1 mol) of propylene oxide was dropwise added to the reaction container over a period of 5 hours, and after the completion of dropwise addition, stirring was carried out at 80 to 120°C for 1 hour to react them, thereby obtaining a reaction composition (A2) (MXDA-PO (1/1)). The AHEW derived from amino groups of the reaction composition (A2) was 67.

### Production Example 3 (production of reaction composition (A3) containing reaction product of metaxylylenediamine with ethylene oxide (reaction mole ratio 1/1.5))

A reaction composition (A3) (MXDA-EO (1/1.5)) was obtained by carrying out the same operations as in Production Example 1, except that the amount of ethylene oxide used in Production Example 1 was changed to 66.1 g (1.5 mol). The AHEW derived from amino groups of the reaction composition (A3) was 82.

### Production Example 4 (production of reaction composition (A4) containing reaction product of metaxylylenediamine with ethylene oxide (reaction mole ratio 1/2))

A reaction composition (A4) (MXDA-EO (1/2)) was obtained by carrying out the same operations as in Production Example 1, except that the amount of ethylene oxide used in Production Example 1 was changed to 88.1 g (2 mol). The AHEW derived from amino groups of the reaction composition (A4) was 112.

### Example 1 (Preparation and evaluation of epoxy resin curing agent composition and epoxy resin composition)

### [Preparation of epoxy resin curing agent composition]

To the reaction composition (A1) obtained in Production Example 1, benzyl alcohol as a non-reactive diluent was added in such an amount that the amount of benzyl alcohol became 40 mass% of the total to dilute the reaction composition, thereby obtaining an epoxy resin curing agent in which the concentration of the reaction composition (A1) was 60 mass%. The AHEW derived from amino groups of the epoxy resin curing agent composition (total amount including benzyl alcohol) was 101.

### [Preparation and evaluation of epoxy resin composition]

As the epoxy resin as a main agent of the epoxy resin composition, a polyfunctional epoxy resin having glycidyloxy groups derived from bisphenol A ("jER828" manufactured by Mitsubishi Chemical Corporation, epoxy equivalent weight 186 g/equivalent weight) was used. The epoxy resin and the epoxy resin curing agent composition were compounded and mixed at a quantitative ratio described in Table 1 so that the ratio of the number of active hydrogen atoms derived from amino groups in the curing agent composition and the number of epoxy groups in the epoxy resin (the number of active hydrogen atoms derived from amino groups in the curing agent composition/the number of epoxy groups in the epoxy resin) might reach 1/1, thereby preparing an epoxy resin composition.

Using the epoxy resin composition obtained, various evaluations were carried out by the aforementioned methods. The results are shown in Table 1.

### Examples 2 to 14, Comparative Examples 1 to 7

An epoxy resin curing agent composition and an epoxy resin composition were prepared in the same manner as in Example 1, except that the type and the compounding amount of the curing agent to be used, and the compounding amounts of benzyl alcohol and/or a xylene formaldehyde resin ("NIKANOL Y-50" or "NIKANOL Y-300" manufactured by Fudow Co,.Ltd) as non-reactive diluents, t-butylphenol (manufactured by Tokyo Chemical Industry Co., Ltd.) as a curing accelerator, and the main agent epoxy resin were changed as shown in Tables 1 to 2, and various evaluations were carried out. The results are shown in Tables 1 to 2.

The "(a1) MXDA" used in Comparative Examples is metaxylylenediamine (manufactured by Mitsubishi Gas Chemical Company, Inc.).

**Table 1**

| (part(s) by mass) | | | | Example | | | | | | | | | | | | | |
|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 |
| Curing agent composition | Curing agent | | (A1) MXDA-EO (1/1) | 60 | | | | 60 | | | | 46.7 | 50 | 70 | 50 | 40 | 20 |
| | | | (A2) MXDA-PO (1/1) | | 60 | | | | 60 | | | | | | | | |
| | | | (A3) MXDA-EO (1/1.5) | | | 60 | | | | 60 | | | | | | | |
| | | | (A4) MXDA-EO (1/2) | | | | 60 | | | | 60 | | | | | | |
| | | | (a1) MXDA | | | | | | | | | | | | | | |
| | Non-reactive diluent | | Benzyl alcohol | 40 | 40 | 40 | 40 | 20 | 20 | 20 | 20 | 31.1 | 30 | 30 | 50 | 60 | 80 |
| | | | NIKANOL Y-50 | | | | | | | | | 22.2 | | | | | |
| | | | NIKANOL Y-300 | | | | | | | | | | 20 | | | | |
| | Curing accelerator | | t-Butylphenol | | | | | 20 | 20 | 20 | 20 | | | | | | |
| Main agent epoxy resin | | | jER828 | 185 | 165 | 137 | 100 | 185 | 165 | 137 | 100 | 144 | 154 | 216 | 154 | 123 | 62 |
| Content of curing agent based on 100 parts by mass of main agent (part(s) by mass) | | | | 32.4 | 36.4 | 43.8 | 60.0 | 32.4 | 36.4 | 43.8 | 60.0 | 32.5 | 32.5 | 32.4 | 32.5 | 32.5 | 32.3 |
| Content of non-reactive diluent based on 100 parts by mass of curing agent (part(s) by mass) | | | | 66.7 | 66.7 | 66.7 | 66.7 | 33.3 | 33.3 | 33.3 | 33.3 | 114.1 | 100.0 | 42.9 | 100.0 | 150.0 | 400.0 |
| Content of curing accelerator based on 100 parts by mass of curing agent (part(s) by mass) | | | | 0.0 | 0.0 | 0.0 | 0.0 | 33.3 | 33.3 | 33.3 | 33.3 | 0.0 | 0.0 | 0.0 | 0.0 | 0.0 | 0.0 |
| Content of main agent in epoxy resin composition (mass%) | | | | 64.9 | 62.3 | 57.8 | 50.0 | 64.9 | 62.3 | 57.8 | 50.0 | 59.0 | 60.6 | 68.4 | 60.6 | 55.2 | 38.3 |
| Content of curing agent in epoxy resin composition (mass%) | | | | 21.1 | 22.6 | 25.3 | 30.0 | 21.1 | 22.6 | 25.3 | 30.0 | 19.2 | 19.7 | 22.2 | 19.7 | 17.9 | 12.3 |
| Content of non-reactive diluent in epoxy resin composition (mass%) | | | | 14.0 | 15.1 | 16.9 | 20.0 | 7.0 | 7.5 | 8.4 | 10.0 | 21.9 | 19.7 | 9.5 | 19.7 | 26.9 | 49.4 |
| Total content of main agent and curing agent in epoxy resin composition (mass%) | | | | 86.0 | 84.9 | 83.1 | 80.0 | 86.0 | 84.9 | 83.1 | 80.0 | 78.1 | 80.3 | 90.5 | 80.3 | 73.1 | 50.6 |
| Total content of main agent, curing agent, and non-reactive diluent in epoxy resin composition (mass%) | | | | 100.0 | 100.0 | 100.0 | 100.0 | 93.0 | 92.5 | 91.6 | 90.0 | 100.0 | 100.0 | 100.0 | 100.0 | 100.0 | 100.0 |
| Evaluation results | | Dry to the touch (1d) | | Ex | Ex | Ex | Ex | Ex | Ex | Ex | Ex | Ex | Ex | Ex | Ex | Ex | Ex |
| | | Water resistance spot (1d/7d) | | G/G | G/G | F/F | F/G | G/G | F/F | G/G | G/G | G/G | G/G | G/G | G/G | G/G | G/G |
| | | Appearance (transparency/gloss) | | Ex/Ex | Ex/Ex | Ex/Ex | Ex/Ex | Ex/Ex | Ex/Ex | Ex/Ex | Ex/Ex | Ex/Ex | Ex/Ex | Ex/Ex | Ex/Ex | Ex/Ex | Ex/G |
| | | RCI drying time (Dust Free), time: min | | 4:30 | 4:00 | 4:15 | 6:45 | 2:45 | 2:45 | 3:00 | 4:45 | 4:15 | 5:00 | 3:00 | 4:00 | 3:30 | 3:45 |
| | | Erichsen test (mm) | | 8.9 | >9 | >9 | >9 | 7.3 | 8.1 | >9 | >9 | >9 | >9 | 8.1 | >9 | >9 | >9 |

**Table 2**

| (part(s) by mass) | | | Comparative Example | | | | | | |
|---|---|---|---|---|---|---|---|---|---|
| | | | 1 | 2 | 3 | 4 | 5 | 6 | 7 |
| Curing agent composition | Curing agent | (A1) MXDA-EO (1/1) | 100 | | | | | | |
| | | (A2) MXDA-PO (1/1) | | 100 | | | | | |
| | | (A3) MXDA-EO (1/1.5) | | | 100 | | | | |
| | | (A4) MXDA-EO (1/2) | | | | 100 | | | |
| | | (a1) MXDA | | | | | 100 | 60 | 60 |
| | Non-reactive diluent | Benzyl alcohol | | | | | | 40 | 20 |
| | | NIKANOL Y-50 | | | | | | | |
| | | NIKANOL Y-300 | | | | | | | |
| | Curing accelerator | t-Butylphenol | | | | | | | 20 |
| Main agent epoxy resin | | jER828 | 308 | 276 | 228 | 166 | 546 | 328 | 328 |
| Content of curing agent based on 100 parts by mass of main agent (part(s) by mass) | | | 32.5 | 36.2 | 43.9 | 60.2 | 18.3 | 18.3 | 18.3 |
| Content of non-reactive diluent based on 100 parts by mass of curing agent (part(s) by mass) | | | 0.0 | 0.0 | 0.0 | 0.0 | 0.0 | 66.7 | 33.3 |
| Content of curing accelerator based on 100 parts by mass of curing agent (part(s) by mass) | | | 0.0 | 0.0 | 0.0 | 0.0 | 0.0 | 0.0 | 33.3 |
| Content of main agent in epoxy resin composition (mass%) | | | 75.5 | 73.4 | 69.5 | 62.4 | 84.5 | 76.6 | 76.6 |
| Content of curing agent in epoxy resin composition (mass%) | | | 24.5 | 26.6 | 30.5 | 37.6 | 15.5 | 14.0 | 14.0 |
| Content of non-reactive diluent in epoxy resin composition (mass%) | | | 0.0 | 0.0 | 0.0 | 0.0 | 0.0 | 9.3 | 4.7 |
| Total content of main agent and curing agent in epoxy resin composition (mass%) | | | 100.0 | 100.0 | 100.0 | 100.0 | 100.0 | 90.7 | 90.7 |
| Total content of main agent, curing agent, and non-reactive diluent in epoxy resin composition (mass%) | | | 100.0 | 100.0 | 100.0 | 100.0 | 100.0 | 100.0 | 95.3 |
| Evaluation results | Dry to the touch (1d) | | G | F | F | P | Ex | Ex | Ex |
| | Water resistance spot (1d/7d) | | F/F | P/P | P/P | P/P | F/F | F/F | F/F |
| | Appearance (transparency/gloss) | | Ex/Ex | Ex/Ex | Ex/Ex | Ex/Ex | G/F | G/F | G/G |
| | RCI drying time (Dust Free), time: min | | 6:00 | 3:00 | >24:00 | >24:00 | 3:30 | 3:00 | 2:30 |
| | | Erichsen test (mm) | 0.5 | 0.4 | 0.7 | Test impossible | 0.5 | 1.3 | 0.8 |

Tables 1 to 2 show that the coating films obtained from the epoxy resin compositions of the present invention had good transparency, gloss, and elongation. Moreover, the curing rates of the epoxy resin compositions were not significantly impaired, and the water resistance of the coating films was also good.

In contrast to this, according to the comparison between Examples 1 to 14 and Comparative Examples 1 to 4, elongation of the coating films formed from the epoxy resin compositions containing no non-reactive diluent significantly decreased even though the epoxy resin curing agents containing the reaction composition (A) were used. Furthermore, it can be seen that curing rates of the epoxy resin compositions and water resistance of the coating films tended to also decrease.

The epoxy resin composition of Comparative Example 4 was not able to be subjected to Erichsen test because the composition was slowly cured, and its coating film was sticky.

As shown in Comparative Examples 5 to 7, when the epoxy resin curing agent containing no reaction composition (A) was used, the effect of improving elongation of the coating film was not obtained even though the non-reactive diluent was used.

### Industrial Applicability

The present invention can provide an epoxy resin composition capable of forming a coating film having good appearance (transparency and gloss) and elongation, and a cured product thereof.

## Claims

1. An epoxy resin composition comprising: an epoxy resin; an epoxy resin curing agent comprising a reaction composition (A) comprising a reaction product of xylylenediamine with an alkylene oxide; and a non-reactive diluent.

2. The epoxy resin composition according to claim 1, wherein the alkylene oxide is at least one selected from the group consisting of ethylene oxide and propylene oxide.

3. The epoxy resin composition according to claim 1 or 2, wherein the reaction composition (A) is a composition obtained by reacting xylylenediamine with an alkylene oxide at a mole ratio of 1/0.2 to 1/4.

4. The epoxy resin composition according to any one of claims 1 to 3, wherein a content of the non-reactive diluent in the epoxy resin composition is 1 to 60 mass%.

5. A cured product of the epoxy resin composition according to any one of claims 1 to 4.
